# EUROPEAN PATENT SPECIFICATION

(11) **EP 4 496 088 B1**
(45) Date of publication and mention of the grant of the patent: **21.10.2026**
(21) Application number: 23770353.3
(22) Date of filing: 27.02.2023
(51) Int. Cl.: H01M 50/195, C08K 3/04, C08K 3/06, C08K 3/22, C08L 23/16, C08L 27/18, C09K 3/10, H01M 50/193

(54) **ELECTROLYTE SOLUTION SEALING MATERIAL**
VERSIEGELUNGSMATERIAL FÜR ELEKTROLYTLÖSUNG
MATÉRIAU D'ÉTANCHÉITÉ DE SOLUTION ÉLECTROLYTIQUE

(30) Priority: 16.03.2022 JP 2022041448
(43) Date of publication of application: 22.01.2025
(73) Proprietor: NOK Corporation, Minato-ku Tokyo 105-8585 (JP)
(72) Inventor: AIBA, Takafumi, Fujisawa-shi, Kanagawa 251-0042 (JP); SUZUKI, Akihiro, Fujisawa-shi, Kanagawa 251-0042 (JP)
(74) Representative: Kraus & Lederer PartGmbB
(86) International application number: PCT/JP2023/006997
(87) International publication number: WO 2023/176394

(56) References cited:
- WO-A1-2011/145595
- CA-A- 1 029 488
- JP-A- 2004 079 469
- JP-A- 2017 091 769

## Description

### TECHNICAL FIELD

The present invention relates to the use of an ethylene/propylene-based copolymer rubber composition as an electrolyte sealing material. More particularly, the present invention relates to such use of an electrolyte sealing material that can be suitably used for batteries, electrolytic capacitors, electric double layer capacitors, and the like.

### BACKGROUND ART

Ethylene/propylene-based copolymer rubber, which is ethylene/propylene copolymer rubber [EPM] or ethylene/propylene/non-conjugated diene copolymer rubber [EPDM], has excellent heat resistance, cold resistance, water resistance, oil resistance, and the like, and is thus widely used for various seal parts (O rings, gaskets, etc.).

Recently, in applications such as automotive electrical equipment and lighting, batteries, capacitors, and the like are used in higher temperature environments, so that the batteries, capacitors, etc. themselves are also required to have heat resistance. In addition, the main factor that determines the life of batteries, capacitors, etc. is the deterioration of their characteristics due to the electrolyte inside the batteries, capacitors, etc. evaporating in the form of gas from the rubber obturating part. Since a larger amount of electrolyte evaporates in a higher temperature environment, rubber materials with excellent gas shielding properties are required to improve heat resistance and extend the life of batteries, capacitors, etc.

Currently, electrolyte sealing materials used in lithium ion batteries and the like are required to have not only high gas shielding properties and excellent electrical insulation properties, as well as resistance to electrolytes, but also have no adverse effect on the battery operation due to the extraction of compounds in rubber with electrolytes. Specifically, the allowable amount of rubber compound extraction is considered to be as extremely low as 5 ppm. Therefore, only MT carbon black, which is chemically stable and from which free sulfur etc. are not extracted, can be used as a filler for rubber.

In addition, in order to prevent short circuits in circuits, including batteries, insulation properties with a volume resistivity of 10¹⁴ Ω·cm or higher are required. EPDM polymers, which can satisfy this value, are used as rubber materials for electrolyte seals used in lithium ion batteries and the like.

On the other hand, fillers compounded in rubber include conductive fillers and insulating fillers. Silica and the like are generally used as insulating fillers compounded in rubber; however, they cannot be used for electrolyte sealing materials because they are dissolved by hydrogen fluoride generated from the electrolyte and have poor chemical stability.

Patent Document 2 describes a process for mixing particulate fluorinated polymers into rubber.

### PRIOR ART DOCUMENTS

### PATENT DOCUMENTS

Patent Document 1 : JP-A-2002-069254
Patent Document 2 : CA-A-1 029 488

### OUTLINE OF THE INVENTION

### PROBLEM TO BE SOLVED BY THE INVENTION

The present invention was made in view of the above problems, and an object thereof is to provide a use of a material as an electrolyte sealing material that has high gas shielding properties, excellent electrical insulation properties, and resistance to electrolytes, that can solve the problem that compounds in rubber are not extracted by the electrolyte, and that can be suitably used for lithium ion batteries and the like.

### MEANS FOR SOLVING THE PROBLEM

The above object of the present invention can be achieved by the use defined in claim 1.

### EFFECT OF THE INVENTION

In the use according to the present invention, ethylene/propylene-based copolymer rubber as further defined in claim 1 is compounded with a predetermined amount of PTFE and/or titanium dioxide having electrical insulation properties, electrolyte resistance, and electrolyte extraction resistance as a filler for rubber, thereby exhibiting the excellent effect of satisfying the desired insulation properties and causing no adverse effect on battery operation.

### EMBODIMENTS FOR CARRYING OUT THE INVENTION

As the ethylene/propylene-based copolymer rubber, an ethylene/propylene/non-conjugated diene terpolymer rubber polymer [EPDM] is used. As the non-conjugated diene, a small amount of dicyclopentadiene, 1,4-hexadiene, dicyclooctadiene, methylene norbornene, vinyl norbornene, ethylidene norbornene, and the like is copolymerized. The Mooney viscosity ML₁₊₄ (125°C) thereof is preferably about 25 to 80, more preferably about 25 to 70. Here, as EPDM, a commercial product, such as EP331 produced by JSR or EPT-4010M produced by Mitsui Chemicals, Inc., can be used as it is or as a blend.

As the insulating filler to be compounded in the ethylene/propylene-based copolymer rubber, at least one of PTFE (polytetrafluoroethylene) and titanium dioxide is used at a ratio of 10 wt.% or more of the total amount of fillers, preferably 45 wt.% or more in terms of ensuring the normal state physical properties of the sealing material. If the insulating filler is used at a ratio less than 10 wt.% of the total amount of fillers, the volume resistivity decreases. Further, even if the insulating filler is used at a predetermined ratio of the total amount of fillers, when a filler other than PTFE or titanium dioxide, such as barium sulfate or mica, is compounded, extraction resistance to water etc. cannot be satisfied, as shown in Comparative Examples 1 and 2, described later. The total amount of fillers as mentioned herein refers to the total amount of an insulating filler and a conductive filler.

In the ethylene/propylene-based copolymer rubber, as a conductive filler, MT carbon black, which is chemically stable and from which free sulfur and the like are not extracted, is further used, preferably at a ratio of 150 parts by weight or less, preferably 50 to 150 parts by weight, more preferably 75 to 125 parts by weight, based on 100 parts by weight of the ethylene/propylene-based copolymer rubber. When a predetermined amount of MT carbon black is compounded, the normal state physical properties of the resulting sealing material can be ensured; thus, in this case, it is sufficient to compound PTFE and/or titanium dioxide at a ratio of about 10 to 30 wt.% of the total amount of fillers. If MT carbon black is used at a ratio greater than this range, it may be difficult to ensure sealing properties.

For the rubber composition comprising each of the above components as essential components, organic peroxide is generally used as a crosslinking agent. Usable examples of organic peroxide include t-butyl peroxide, dicumyl peroxide, 2,5-dimethyl-2,5-di-t-butylperoxyhexane, 2,5-dimethyl-2,5-di-t-butylperoxyhexine-3, t-butylcumyl peroxide, 1,3-di-t-butylperoxyisopropylbenzene, 2,5-dimethyl-2,5-dibenzoylperoxyhexane, peroxyketal, peroxyester, and the like.

Usable examples of peroxyketal include n-butyl-4,4-di(t-butylperoxy)valerate, 2,2-di(t-butylperoxy)butane, 2,2-di[4,4-di(t-butylperoxy)cyclohexyl]propane, 1,1-di(t-butylperoxy)cyclohexane, di(3,5,5-trimethylhexanoyl)peroxide, 1,1-di(t-hexylperoxy)cyclohexane, 1,1-di(t-hexylperoxy)-3,3,5-trimethylcyclohexane, 1,1-di(t-butylperoxy)-2-methylcyclohexane, and the like.

Further, usable examples of peroxyester include t-butyl peroxybenzoate, t-butyl peroxyacetate, t-hexyl peroxybenzoate, t-butyl peroxy-2-ethylhexyl monocarbonate, t-butyl peroxylaurate, t-butyl peroxyisopropyl monocarbonate, t-butyl peroxy-3,5,5-trimethylhexanoate, t-butyl peroxymaleic acid, t-hexyl peroxyisopropyl monocarbonate, and the like.

The crosslinking agent can be added at a ratio of about 0.5 to 10 parts by weight, preferably about 0.8 to 5 parts by weight, based on 100 parts by weight of the ethylene/propylene-based copolymer rubber. Within this range, foaming during crosslinking, which disables molding, can be prevented, and the crosslinking density is improved, making it easier to obtain products with sufficient physical properties.

Further, a crosslinking accelerator may be contained, if necessary. Usable examples of crosslinking accelerator include triallyl isocyanurate, triallyl cyanurate, liquid polybutadiene, N,N'-m-phenylenedimaleimide, trimethylolpropane trimethacrylate, and the like can be used. By adding an appropriate amount of crosslinking accelerator, the crosslinking efficiency can be improved, and the heat resistance and mechanical properties can also be further improved.

In addition to the above components, acid acceptors, processing aids, plasticizers, lubricants, antioxidants, and other compounding agents that are generally used in the rubber industry are suitably added, if necessary, to the rubber composition as long as the object of the present invention is not impaired.

The rubber composition can be prepared by kneading various materials using a kneading machine, such as a single-screw extruder, a twin-screw extruder, an open roll, a Banbury mixer, a kneader, or a high shear mixer.

The vulcanization molding thereof is carried out by primary vulcanization performed at about 150 to 220°C for about 1 to 60 minutes and oven vulcanization (secondary vulcanization) optionally performed at about 120 to 200°C for about 1 to 24 hours.

### EXAMPLES

Next, the present invention will be described in detail with reference to Examples. The present invention, including its effects, is not limited to the Examples.

### Example 1

| | |
|---|---|
| EPDM (EP331, produced by JSR) | 60 parts by weight |
| EPDM (EPT-4010M, produced by Mitsui Chemicals, Inc.) | 36.5 parts by weight |
| MT Carbon black (Thermax N990, produced by Cancarb Limited) | 84 parts by weight |
| Titanium dioxide (Tipaque A-100, produced by Ishihara Sangyo Kaisha, Ltd.) | 10 parts by weight |
| Peroxide crosslinking agent (Percumyl D, produced by NOF Corporation) | 3.5 parts by weight |

The above components were kneaded by a closed type kneader and an open roll, and the compression molding at 180°C for 6 minutes. Subsequently, oven vulcanization at 150°C for 1 hour, thereby obtaining a test piece with a thickness of 2 mm. The obtained test piece was measured for normal state physical properties and volume resistivity, water extraction test and electrolyte dipping test.
Normal state physical properties: According to JIS K6251
   corresponding to ISO 37,
   According to JIS K6253
   corresponding to ISO 7619-1
Volume resistivity: according to JIS K6271 corresponding to ISO 14309
   The volume resistivity was measured by a double ring electrode method at an applied voltage of 500 V.
   In order to prevent short circuits in circuits, including batteries, insulation properties of 10¹⁴ Ω·cm or more are required.
Water extraction test: A water extract obtained by dipping the test piece in ion exchanged water at 90°C for 70 hours was subjected to quantitative analysis of anions using ion chromatography, and the total amount of all detected anions based on the weight of the dipped test piece was evaluated.
   A water extractability of 5 ppm or less is required for electrolyte seals.
Electrolyte dipping test: A mixed solution of ethylene carbonate/dimethyl carbonate/ethyl methyl carbonate (volume ratio = 3/4/3) was mixed with LiPF₄ to a LiPF₄ concentration of 1 mol/L, the test piece was dipped in the obtained test solution at 90°C for 250 hours, and the volume change rate was evaluated according to JIS K6258 corresponding to ISO1817.
   A volume change rate of 10% or less is required for electrolyte seals.

### Example 2

In Example 1, the amount of MT Carbon black was changed to 70 parts by weight, and the amount of titanium dioxide was changed to 16.7 parts by weight, respectively.

### Example 3

In Example 1, the amount of MT Carbon black was changed to 52.5 parts by weight, and the amount of titanium dioxide was changed to 25 parts by weight, respectively.

### Example 4

In Example 1, MT Carbon black was not used, and the amount of titanium dioxide was changed to 50 parts by weight, and the amount of peroxide vulcanizing agent was changed to 4.5 parts by weight, respectively.

### Example 5

In Example 1, 14 parts by weight of PTFE (Rubron L-5F produced by Daikin Industries, Ltd.) was used in place of the titanium dioxide.

### Comparative Example 1

In Example 1, 10 parts by weight of barium sulfate (Bariace B-54 produced by Sakai Chemical Industry Co., Ltd.) was used in place of the titanium dioxide.

### Comparative Example 2

In Example 1, 10 parts by weight of mica (FNS mica produced by Sanshin Mining Ind. Co., Ltd.) was used in place of the titanium dioxide.

### Comparative Example 3

In Example 1, the amount of MT Carbon black was changed to 92 parts by weight, and the amount of titanium dioxide was changed to 6.3 parts by weight, respectively.

### Comparative Example 4

In Example 1, titanium dioxide was not used, and the amount of MT Carbon black was changed to 105 parts by weight.

### Comparative Example 5

In Example 5, the amount of PTFE was changed to 6.3 parts by weight.

Following Table shows the results obtained in the above Examples and Comparative Examples, together with the ratio of the insulating filler.

**Table**

| Ratio▪ Measurement item | Example | | | | | Comparative Example | | | | |
|---|---|---|---|---|---|---|---|---|---|---|
| | 1 | 2 | 3 | 4 | 5 | 1 | 2 | 3 | 4 | 5 |
| Ratio of the insulating filler (wt.%) | 10.6 | 19.3 | 32.3 | 100 | 14.3 | 10.6 | 10.6 | 6.4 | 0 | 7.0 |

| Normal state value | | | | | | | | | | |
|---|---|---|---|---|---|---|---|---|---|---|
| Hardness (Duro A) | 76 | 72 | 69 | 61 | 74 | 74 | 76 | 77 | 79 | 79 |
| Tensile strength (MPa) | 16.1 | 14.2 | 12.5 | 4.47 | 14.6 | 15.8 | 17.1 | 16.5 | 16.8 | 16.8 |
| Elongation at break (%) | 205 | 204 | 224 | 246 | 186 | 200 | 190 | 188 | **184** | 184 |
| Volume resistivity | 1.78 | 4.51 | 4.72 | 1.03 | 4.86 | 1.21 | 1.66 | 1.68 | 1.29 | 1.34 |
| (Ω·cm) | E+14 | E+15 | E+15 | E+15 | E+15 | E+14 | E+14 | E+11 | E+09 | E+09 |

| Water extraction test | | | | | | | | | | |
|---|---|---|---|---|---|---|---|---|---|---|
| Amount of detected anions (ppm) | 1.2 | 1.7 | 1.6 | 2.6 | 0.8 | 24.1 | 15.3 | 0.9 | 0.5 | 0.7 |

| Electrolyte dipping test | | | | | | | | | | |
|---|---|---|---|---|---|---|---|---|---|---|
| Volume change rate (%) | +5.1 | +5.3 | +4.9 | +5.9 | +5.0 | +5.4 | +26.1 | +5.2 | +5.1 | +5.0 |

### INDUSTRIAL APPLICABILITY

The sealing material obtained from the electrolyte sealing material of the present invention has electrolyte resistance and electrolyte extraction resistance, and thus can be suitably used as a sealing material for various batteries such as lithium ion batteries and nickel metal hydride batteries, electrolytic capacitors, electric double layer capacitors, and the like.

## Claims

1. Use of an ethylene/propylene-based copolymer rubber composition as an electrolyte sealing material, wherein the ethylene/propylene-based copolymer rubber composition is obtained by compounding PTFE and/or titanium dioxide in ethylene/propylene-based copolymer rubber, wherein the amount of PTFE and/or titanium dioxide compounded in the total amount of fillers is 10 wt.% or more,
wherein the ethylene/propylene-based copolymer rubber composition comprises PTFE and/or titanium dioxide and MT carbon black compounded in ethylene/propylene-based copolymer rubber, and
wherein the ethylene/propylene-based copolymer rubber is EPDM.

2. The use according to claim 1, wherein the amount of PTFE and/or titanium dioxide compounded in the total amount of fillers is 45 wt.% or more.

3. The use according to claim 1, wherein the MT carbon black is used at a ratio of 150 parts by weight or less based on 100 parts by weight of the ethylene/propylene-based copolymer rubber.

4. The use according to claim 1, wherein the ethylene/propylene-based copolymer rubber composition is used as a molding material for sealing material used in batteries.

5. An electrolyte seal, which is a crosslinked molded product of the ethylene/propylene-based copolymer rubber composition defined in claim 1.

## Patentansprüche

1. Verwendung einer Ethylen/Propylen-Copolymerkautschuk-Zusammensetzung als Elektrolyt-Dichtungsmaterial, wobei die Ethylen/Propylen-Copolymerkautschuk-Zusammensetzung durch Compoundieren von PTFE und/oder Titandioxid in Ethylen/Propylen-Copolymerkautschuk erhalten wird, wobei die Menge an compoundiertem PTFE und/oder Titandioxid in der Gesamtmenge der Füllstoffe 10 Gew.-% oder mehr beträgt,
wobei die Ethylen/Propylen-Copolymerkautschuk-Zusammensetzung PTFE und/oder Titandioxid und MT-Ruß umfasst, die in Ethylen/Propylen-Copolymerkautschuk compoundiert sind, und
wobei der Ethylen/Propylen-Copolymerkautschuk EPDM ist.

2. Verwendung nach Anspruch 1, wobei die Menge an compoundiertem PTFE und/oder Titandioxid in der Gesamtmenge der Füllstoffe 45 Gew.-% oder mehr beträgt.

3. Verwendung nach Anspruch 1, wobei der MT-Ruß in einem Verhältnis von 150 Gewichtsteilen oder weniger bezogen auf 100 Gewichtsteile des Ethylen/Propylen-Copolymerkautschuks verwendet wird.

4. Verwendung nach Anspruch 1, wobei die Ethylen/Propylen-Copolymerkautschuk-Zusammensetzung als Formmaterial für in Batterien verwendetes Dichtungsmaterial verwendet wird.

5. Elektrolytdichtung, die ein vernetztes Formprodukt der in Anspruch 1 definierten Ethylen/Propylen-Copolymerkautschuk-Zusammensetzung ist.

## Revendications

1. Utilisation d'une composition de caoutchouc copolymère à base d'éthylène/propylène comme matériau d'étanchéité pour électrolyte, dans laquelle la composition de caoutchouc copolymère à base d'éthylène/propylène est obtenue en incorporant du PTFE et/ou du dioxyde de titane dans un caoutchouc copolymère à base d'éthylène/propylène, dans laquelle la quantité de PTFE et/ou de dioxyde de titane incorporée dans la quantité totale de charges est de 10 % en poids ou plus,
dans laquelle la composition de caoutchouc copolymère à base d'éthylène/propylène comprend du PTFE et/ou du dioxyde de titane et du noir de carbone MT incorporés dans un caoutchouc copolymère à base d'éthylène/propylène, et
dans laquelle le caoutchouc copolymère à base d'éthylène/propylène est un EPDM.

2. Utilisation selon la revendication 1, dans laquelle la quantité de PTFE et/ou de dioxyde de titane incorporée dans la quantité totale de charges est de 45 % en poids ou plus.

3. Utilisation selon la revendication 1, dans laquelle le noir de carbone MT est utilisé dans une proportion de 150 parties en poids ou moins pour 100 parties en poids du caoutchouc copolymère à base d'éthylène/propylène.

4. Utilisation selon la revendication 1, dans laquelle la composition de caoutchouc copolymère à base d'éthylène/propylène est utilisée comme matériau de moulage pour un matériau d'étanchéité utilisé dans des batteries.

5. Joint d'étanchéité pour électrolyte, qui est un produit moulé réticulé de la composition de caoutchouc copolymère à base d'éthylène/propylène définie dans la revendication 1.
